# EUROPÄISCHE PATENTSCHRIFT

(11) **EP 1 254 733 B1**
(45) Veröffentlichungstag und Bekanntmachung des Hinweises auf die Patenterteilung: **23.03.2005**
(21) Anmeldenummer: 02007994.3
(22) Anmeldetag: 10.04.2002
(51) Int. Cl.: B23D 63/00, B23D 63/14

(54) **Verfahren zum Bearbeiten von mehrschneidigen Werkzeugen, bei denen die Schneiden auf einem Flugkreis liegen und bei dem die Rundlaufabweichungen der Schneiden minimiert werden**
Method for working tools having plural, circularly arranged, cutting teeth in which the eccentricity of the teeth is minimised
Méthode d' usinage des outils à plusieurs dents disposées en cercle dans laquelle l'excentricité des dents est minimisée

(30) Priorität: 05.05.2001 DE 10121869
(43) Veröffentlichungstag der Anmeldung: 06.11.2002
(73) Patentinhaber: ERNST WINTER & SOHN Diamantwerkzeuge GmbH & Co., 22844 Norderstedt (DE)
(72) Erfinder: Meyer, Hans-Robert, Dr., 21723 Hollern (DE)
(74) Vertreter: Patentanwälte Hauck, Graalfs, Wehnert, Döring, Siemons, Schildberg

(56) Entgegenhaltungen:
- DE-A- 19 804 762
- DE-C- 19 748 673

## Beschreibung

Die Erfindung bezieht sich auf ein Verfahren zum Bearbeiten von mehrschneidigen Werkzeugen, bei denen die Schneiden auf einem Flugkreis liegen und bei dem die Rundlaufabweichungen der Schneiden minimiert werden nach dem Patentanspruch 1 (siehe DE 198 04 762 A1).

Zur maschinellen Bearbeitung von Holz und Holzwerkstoffen werden zunehmend Werkzeuge mit Schneiden aus schwer schleifbaren Materialien, wie z.B. Diamant, verwendet. Beispielsweise sind polykristalline Diamantschichten auf geeignete Trägerwerkstoffe aufgedampft und haben eine Schichtdicke von bis zu 0,6 mm. Alternativ sind sie auf geeignete Hartmetallunterlagen aufgesintert und können dann größere Schichtdicken von z.B. 3 mm aufweisen.

Derartige Diamantschneiden werden insbesondere an mehrschneidigen Werkzeugen, wie z.B. Fräsern und Sägen eingesetzt. Bei einer Säge besteht der Grundkörper zum Beispiel aus Stahl, auf den die Schneidelemente aus Hartmetall mit einer Diamantschicht aufgelötet oder aufgeschweißt sind.

Um einen anspruchsgerechten Schneidvorgang zu gewährleisten, dürfen die einzelnen Zähne nur eine bestimmte Rundlaufabweichung aufweisen. So dürfen sie z.B. nicht mehr als 0,01 mm vom idealen Flugkreis abweichen. Darüber hinaus müssen sie eine bestimmte Geometrie hinsichtlich der Winkel am Schneidkeil aufweisen. Die Schärfe (Schartigkeit) der Schneide darf einen bestimmten Betrag nicht überschreiten.

Es ist bekannt, die Zähne derartiger Sägeblätter mit einem elektroerosiven Verfahren zu bearbeiten. Ein derartiges Verfahren ist zeitaufwändig und gestattet naturgemäß keine beliebig feine Schneidenschartigkeit, da die Funkenerosion eine verfahrensbedingte Rauheit an der Schneide erzeugt

Aus DE 198 04 762 A1 ist ein Verfahren und eine Vorrichtung zum Schleifen der Frei-, Span- und/oder Brustfläche von Zähnen eines Sägewerkzeugs bekannt geworden. Als Bearbeitungswerkzeug wird eine Schleifscheibe vorgesehen, vorzugsweise eine Diamantschleifscheibe. Bei dem Verfahren wird zunächst die Zahnteilung ermittelt, dann das Sägewerkzeug so positioniert, daß ein erster Zahn sich in der Bearbeitungsebene befindet. Danach wird die Zahnfläche mittels des Bearbeitungswerkszeugs abgetastet zur Bestimmung der Zahnart, wie Vor- oder Nachschneidezahn oder dergleichen, Zahnhöhe, Spanwinkel, Freiflächenwinkel, Brustflächenwinkel oder dergleichen. Danach erfolgt die Bearbeitung der abgetasteten Zahnfläche nach vorgegebenen und/oder ermittelten Werten. Dieses Verfahren wird für die jeweils folgenden Zähne wiederholt.

Der Erfindung liegt die Aufgabe zugrunde, ein Verfahren zum Bearbeiten von mehrschneidigen Werkzeugen der eingangs genannten Art anzugeben, bei dem die Bearbeitungszeit, insbesondere von Diamantwerkzeugen, bei gleichzeitiger Minimierung der Rundlaufabweichungen wesentlich herabgesetzt werden kann. Ferner soll eine bessere, d.h. geringere Schneidenschartigkeit erreicht werden bei einer besseren Oberflächengüte der Spanflächen. Diese Aufgabe wird durch die Merkmale des Patentanspruchs 1 gelöst.

Bei dem erfindungsgemäßen Verfahren wird das Werkzeug drehbar angeordnet, so dass es in beliebigen und vorgegebenen Drehlagen feststellbar ist. Die Position jeder Schneide wird daraufhin vermessen, und zwar relativ zur Flugkreisachse der Schneiden. Die Messwerte werden gespeichert. Anschließend wird das Werkstück so positioniert, dass eine erste Schneide, die mit dem kleinsten Flugkreisdurchmesser in eine Bearbeitungsposition gefahren wird. Hierzu ist zu bemerken, dass das Ermitteln z.B. des kleinsten Flugkreisdurchmessers auch in einer separaten Messstation vorgenommen werden kann. Anschließend wird dann das Werkzeug in die Bearbeitungsmaschine eingespannt, in der das Werkzeug ebenfalls drehbar und in vorgegebenen Drehlagen feststellbar ist. Einfacher ist es naturgemäß, wenn sowohl die Vermessung als auch die Bearbeitung in einer einzigen Maschine stattfindet.

In der Bearbeitungsposition wird dann das Bearbeitungswerkzeug in Kontakt mit der Schneide gefahren. Die Lage der Kontaktpunkte wird z.B. mit Hilfe eines Akustik-Emissionsverfahrens gemessen. Danach wird das Bearbeitungswerkzeug mit der Schneide außer Eingriff gebracht und um einen vorgegebenen Betrag zugestellt. Dies kann nach einer Ausgestaltung der Erfindung dadurch erfolgen, dass das Bearbeitungswerkzeug beim Außereingriffbringen mit der Schneide sich lediglich radial bewegt, so dass die Zustellung um den gewünschten Betrag erfolgen kann. Im anderen Fall wird zum vorgegebenen Zustellweg eine von der Schneide zurückgefahrene Strecke hinzu addiert. In letzterem Fall wird die Strecke gemessen, welche das Bearbeitungswerkzeug aus einer Nullposition bis zum Kontakt mit der Schneide zurückgelegt hat.

Durch Vorschub des Werkzeugs kann die erste Schneide abgetragen werden. Anschließend wird das Werkzeug um eine Teilung oder auch um eine beliebige Anzahl von Teilungen vorbewegt zu einer nächsten Schneide. Danach wird das Bearbeitungswerkzeug in Kontakt mit dieser Schneide gebracht und anschließend um einen vorgegebenen Zustellbetrag relativ zum Kontaktpunkt zugestellt. Die Zustellung erfolgt wie bei der ersten Schneide. Dieser Vorgang wird dann für die restlichen Schneiden wiederholt.

Nach einer weiteren Ausführungsform der Erfindung wird die Zustellung nicht nur relativ zum jeweiligen Erstkontaktpunkt zwischen Werkzeug und Werkstück verwirklicht, sondern darüber hinaus der Verschleißbetrag an der Schleifscheibe durch den vorhergegangenen Schleifvorgang ermittelt. Dazu fährt die Scheibe jeweils in eine Ausgangsposition zurück und der Weg zwischen Ausgangsposition und Erstkontaktposition wird gemessen. Der Verschleiß der Scheibe ergibt sich dann aus der Lageabweichung, den zu schleifenden Zähnen und der gemessenen Weglänge unter Berücksichtigung der Scheibenmaße.

Dieses Verfahren ist von Bedeutung, um bei größeren Zustellungen den sog. Treppenverschleiß des Schleifwerkzeuges zu kompensieren. Der Treppenverschleiß ist dadurch gekennzeichnet, dass sich über eine Anzahl von Schneiden ein gleichmäßiger Scheibenverschleiß einstellt, der sich aber bei einer Schneide plötzlich vervielfacht und eine unzulässige Rundlaufabweichung dieser einen Schneide bewirkt. Die nächste Schneide liegt dann nach dem erfindungsgemäßen Verfahren auch ohne Weglängenmessung wieder in der vorgegebenen Toleranz, weil sich der Scheibenverschleiß wieder normalisiert. Mit Weglängenmessung kann erfindungsgemäß der zu große Verschleißbetrag gemessen und zum Anlass genommen werden, den vorher geschliffenen Zahn noch einmal mit einer entsprechend geringeren Zustellung zu schleifen.

Das Bearbeitungswerkzeug ist eine Diamantschleifscheibe, wobei die Diamantschleifkörnung beispielhaft splittrige Diamantarten verwendet und das Korn in keramischer Bindung vorliegt. Es gilt zwar grundsätzlich, dass ein zu schleifendes Material weicher sein soll als das Schleifkom des Schleifwerkzeugs. Gleichwohl wird beim erfindungsgemäßen Verfahren eine Diamantschleifscheibe verwendet.

Bei einer Diamantschleifscheibe kommt es naturgemäß zu einem Verschleiß, so dass dieser Verschleiß beim Abtrag der nächstfolgenden Schneiden jeweils zu berücksichtigen ist. Beträgt zum Beispiel der Axialverschleiß pro Zahn an einer Schleifscheibe im Mittel 5 µm und weist eine Säge 60 Zähne auf, dann ergibt sich vom ersten bis zum letzten Zahn ein Axialverschleiß der Schleifscheibe von 0,30 mm. Geht man von einer konstanten Zustellung von z.B. 0,2 mm aus, so findet beim letztgeschliffenen Zahn kein Abtrag mehr statt. Damit wird zudem eine Rundlaufabweichung erzeugt, die außerhalb der zulässigen Toleranz liegt.

Es kann daran gedacht werden, den Verschleißwiderstand der Schleifscheibe zu erhöhen. Dies führt jedoch zu größeren Schleifkräften und Schleiftemperaturen. Soll der Verschleißwiderstand der Schleifscheibe so weit erhöht werden, dass bei den gewählten Einsatzbedingungen die Rundlaufabweichung im Bereich der zulässigen Größenordnung liegt, dann sind die Schleifkräfte und Schleiftemperaturen zu hoch. Die Diamantschicht des Sägeblatts wird thermisch zu stark beschädigt und verliert an Lebensdauer.

Das erfindungsgemäße Verfahren minimiert den Einfluss des Schleifscheibenverschleißes auf die Rundlaufabweichung und gleichzeitig den Einfluss des ungleichmäßigen Scheibenverschleißes aufgrund unterschiedlicher Zustellbeträge. Durch das erfindungsgemäße Verfahren gelingt es, Schleifscheiben zu verwenden, die weder unzulässige Kräfte noch unzulässige Temperaturen erzeugen und somit einen wirtschaftlichen Schleifvorgang ermöglichen. Beim erfindungsgemäßen Verfahren werden insbesondere die Bearbeitungszeiten von Diamantwerkzeugen herabgesetzt und eine geringere Schneidenschartigkeit erhalten bei besserer Oberflächengüte der Spanflächen.

Für die Erfassung der tatsächlichen Position der Schneide, beispielsweise eines einzelnen Sägezahns sind verschiedene Lösungen denkbar. Ein Sensor kann optisch, berührend oder akustisch wirken. Die einfachste Lösung ist die Verwendung eines sogenannten Körperschallsensors (Acoustic Emission Sensors). Das Erfassen des Kontakts des Bearbeitungswerkzeugs bzw. der Schleifscheibe mit der Schneide kann ebenfalls auf akustischem Wege ermittelt werden.

Die Erfindung soll nachfolgend anhand von Zeichnungen näher erläutert werden.
- Fig. 1: zeigt äußerst schematisch ein Sägeblatt, das mit dem erfindungsgemäßen Verfahren bearbeitet werden soll.
- Fig. 2: zeigt äußerst schematisch einen Zahn des Sägeblatts nach Fig. 1 und eine Schleifscheibe im Einsatz.

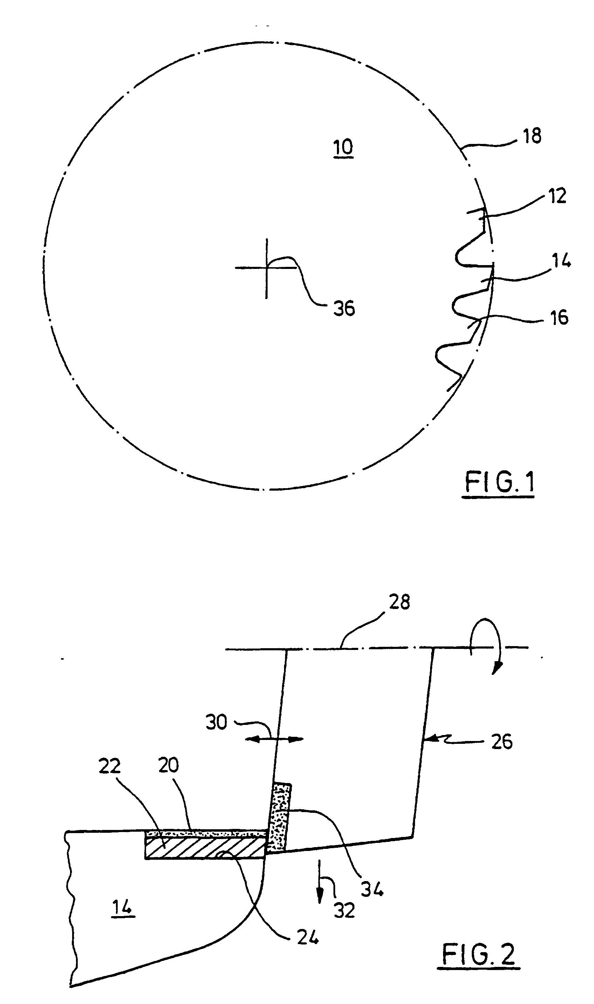

In Fig. 1 ist äußerst schematisch ein Sägeblatt 10 dargestellt, von dem nur drei Zähne 12, 14 und 16 angedeutet sind. Ein Flugkreis für eine Zahnschneide ist mit 18 bezeichnet, der jedoch ersichtlich einen größeren Durchmesser hat als der angestrebte ideale Flugkreis, auf dem alle Zähne liegen.. Vor dem endgültigen Bearbeiten der Zahnschneiden ergibt sich somit eine mehr oder weniger große Abweichung von diesem Flugkreis. Es ist erwünscht, eine große Rundlaufgenauigkeit zu erreichen, d.h. eine minimale Toleranz der einzelnen Schneiden relativ zum vorgegebenen Flugkreis.

In Fig. 2 ist z.B. der Zahn 14 wiedergegeben. Der Trägerkörper des Sägeblatts besteht z.B. aus einem hochwertigen Stahl. Eine Diamantschneide 20 ist zum Beispiel auf ein Hartmetallelement 22 aufgesintert. Die Einheit aus Diamantschneide 20 und Hartmetallelement 22 ist in eine entsprechende Ausnehmung 24 des Zahns 14 eingesetzt und darin verschweißt oder verlötet.

Eine topfartige Schleifscheibe 26 ist um eine Achse 28 drehbar und kann zu Zustellzwecken in Richtung des Doppelpfeils 30 verstellt werden und zu Zwecken des Vorschubs in Richtung des Pfeils 32. Mit Hilfe eines ringförmigen Schleifbelags 34 kann die Diamantschneide 20 abgeschliffen werden. Der Schleifbelag 34 ist ebenfalls aus Diamant, z.B. in einer Keramikbindung. Die Scheibenumfangsgeschwindigkeit beträgt z.B. 24 m/s. Die Vorschubgeschwindigkeit ist z.B. 0,2 mm/s = 12 mm/min. Eine beispielhafte Zustellung beträgt z.B. 0,2 mm. Bei der Bearbeitung wird ein Kühlmittel verwendet, z.B. Öl oder eine Emulsion.

Vor dem Schleifvorgang wird die Position jedes Zahns des Sägeblatts 10 im Hinblick auf die Achse 36 des Sägeblatts 10 vermessen. Dies erfolgt für jede Schneide, anschließend werden alle Werte abgespeichert. Dies ist z.B. in einer separaten Messstation möglich oder in der Schleifstation, in der die Schleifscheibe 26 angeordnet wird. Die Vermessung kann auch nur dazu dienen, zunächst diejenige Schneide zu ermitteln, die den kleinsten Flugkreisdurchmesser hat, beispielsweise in Fig. 1 der Zahn 16.

In der Schleifmaschine wird das Sägeblatt 10 durch Drehung so positioniert, dass der Zahn mit dem kleinsten Flugkreisdurchmesser in Startposition gebracht wird. Anschließend wird die Schleifscheibe 26 in Kontakt mit dem Zahn gebracht. Diese Position kann durch einen geeigneten Körperschallsensor oder dergleichen ermittelt und zugleich vermessen werden. Anschließend wird die Schleifscheibe 26 mit dem Zahn 24 radial außer Eingriff gebracht. Danach wird die Schleifscheibe 26 um den vorgegebenen Zustellbetrag zugestellt, und der Zahn wird durch radiale Vorschubbewegung der Schleifscheibe 26 geschliffen. Nachdem die Schleifscheibe in die Ausgangsposition zurückgefahren worden ist, wird das Sägeblatt 10 gedreht, bis ein anderer Zahn in die Schleifposition gebracht ist. Nunmehr wird die Schleifscheibe 26 in Kontakt mit dem zweiten Zahn gebracht. Zum Kontakt mit der ersten Schleifscheibe ergibt sich eine Maßabweichung, die sich zusammensetzt aus der Flugkreisabweichung plus dem Schleifscheibenverschleiß. Die erforderliche Zustellung der Schleifscheibe zum Schleifen des zweiten Zahns muss daher die Flugkreisdifferenz dieses Zahns zum ersten Zahn berücksichtigen. Der Zustellbetrag ergibt sich aus dem vorgegebenen Zustellbetrag plus der Flugkreisdifferenz. Die Flugkreisdifferenz errechnet sich entweder aus den vorher bestimmten Messwerten oder es findet eine Positionsbestimmung des zweiten Zahns kurz vor der Zustellung statt.

Der beschriebene Vorgang wiederholt sich dann für die restlichen Zähne.

Das beschriebene Verfahren kann zwar nicht die Abweichungen berücksichtigen, welche dadurch entstehen, dass der Abtrag eines Zahns nicht exakt dem Zustellbetrag entspricht, weil während des Schleifens die Schleifschicht 34 der Schleifscheibe 26 verschleißt, gleichwohl ermöglicht das beschriebene Verfahren die Einhaltung vorgeschriebener Toleranzen, d.h. die Gewährleistung einer Rundlaufabweichung von z.B. maximal 0,01 mm.

## Patentansprüche

1. Verfahren zum Bearbeiten von mehrschneidigen Werkzeugen, bei denen die Schneiden auf einem Flugkreis liegen, und bei dem die Rundlaufabweichungen der Schneiden minimiert werden, mit den folgenden Schritten:
a) das Werkzeug wird um die Flugkreisachse drehbar und in vorgegebenen Drehlagen feststellbar angeordnet
b) die Position jeder Schneide relativ zur Achse wird vermessen, und die Messwerte werden gespeichert
c) eine erste Schneide mit dem kleinsten Flugkreisdurchmesser, wird in eine Bearbeitungsposition gefahren
d) ein rotierendes Bearbeitungswerkzeug wird in Kontakt mit der Schneide gefahren
e) das Bearbeitungswerkzeug wird mit der Schneide außer Eingriff gebracht und um einen vorgegebenen Betrag zugestellt zwecks Bearbeitens der Schneide aufgrund eines Vorschubs des Bearbeitungswerkzeugs
f) eine nächste Schneide des Werkzeugs wird in die Bearbeitungsposition gefahren und das Bearbeitungswerkzeug in Kontakt mit der nächsten Schneide gebracht, wonach das Bearbeitungswerkzeug um den vorgegebenen Zustellbetrag plus der Differenz zwischen dem Flugkreisdurchmesser der ersten und nächsten Schneide zugestellt wird
g) der Verfahrensschritt f) wird für die restlichen Schneiden wiederholt.

2. Verfahren nach Anspruch 1, **dadurch gekennzeichnet, dass** das Werkzeug durch eine der Vorschubrichtung entgegengesetzte Radialbewegung mit der Schneide außer Eingriff gebracht wird, bevor sie zugestellt wird.

3. Verfahren nach Anspruch 1, **dadurch gekennzeichnet, dass** das Bearbeitungswerkzeug nach dem Kontakt mit der Schneide entgegengesetzt der Zustellrichtung entfernt wird, wobei zuvor die von dem Bearbeitungswerkzeug zurückgelegte Strecke bis zur Kontaktnahme gemessen wird.

4. Verfahren nach Anspruch 1, **dadurch gekennzeichnet, dass** der Verschleiß des Bearbeitungswerkzeugs ermittelt wird, indem das Bearbeitungswerkzeug nach dem Bearbeiten einer Schneide in eine Ausgangsposition zurückfährt und der Weg zwischen Ausgangsposition und der Erstkontaktposition gemessen wird, wobei sich der Verschleiß aus der Lageabweichung der zu schleifenden Schneide und der gemessenen Weglänge ergibt unter Berücksichtigung der Maße des Bearbeitungswerkzeugs.

5. Verfahren nach einem der Ansprüche 1 bis 4, **dadurch gekennzeichnet, dass** die Schneide nach einer ersten Bearbeitung erneut bearbeitet wird, wenn die von dem Bearbeitungswerkzeug zurückgelegte Strecke bis zur Kontakaufnahme oder der gemessene Verschleiß einen vorgegebenen Wert überschreitet.

## Claims

1. Method for working of tools having plural, circularly arranged cutting teeth, in which the eccentricity of the teeth is minimised, using the following steps:
a) the tool is rotatable around the cutting circle axis and may be locked in place in specified points of rotation
b) the position of each tooth relative to the axis is measured, and the measured values are stored
c) a first tooth with the smallest cutting circle diameter is moved to a working position
d) a rotating working tool is moved into contact with the tooth
e) the working tool is brought out of engagement with the tooth and advanced by a specified amount for the purpose of working of the tooth based on a feed of the working tool
f) a next tooth of the tool is moved into the working position and the working tool is brought into contact with the next tooth, whereby the working tool is advanced by the specified infeed increment, plus the difference between the cutting circle diameter of the first and next tooth
g) the method step f) is repeated for the remaining teeth.

2. Method according to Claim 1, **characterized in that** the tool is brought out of contact with the tooth by a radial movement opposite to the feed direction before it is advanced.

3. Method according to Claim 1, **characterized in that** the working tool, after the contact with the tooth, is removed opposite to the feed direction, whereby beforehand the distance traveled by the working tool to the point of contact is measured.

4. Method according to Claim 1, **characterized in that** the wear of the working tool is determined, **in that** the working tool moves back to an initial position after the working of a tooth and the distance between the initial position and the first contact position is measured, whereby the wear results from the deviation of position of the tooth to be sharpened and the measured length of distance taking into consideration the dimensions of the working tool.

5. Method according to one of the Claims 1 to 4, **characterized in that** the tooth will be re-worked after a first working if the traveled distance of the working tool to the contact point or the measured wear exceeds a specified value.

## Revendications

1. Méthode d'usinage d'outils à plusieurs dents dans le cas desquels les dents sont disposées en cercle et dans laquelle les excentricités des dents sont minimisées, comprenant les étapes suivantes :
a) l'outil est disposé de façon à pouvoir tourner autour de l'axe du cercle et à pouvoir être arrêté dans des emplacements de rotation prédéfinis
b) la position de chaque dent par rapport à l'axe est mesurée, et les valeurs de mesure sont enregistrées
c) une première dent avec le diamètre de cercle le plus petit est conduite dans une position d'usinage
d) un outil d'usinage rotatif est amené en contact avec la dent
e) l'outil d'usinage est dégagé de sa prise avec la dent et approché d'une distance prédéfinie en vue de l'usinage de la dent du fait d'une avance de l'outil d'usinage
f) une dent suivante de l'outil est conduite dans la position d'usinage et l'outil d'usinage est amené en contact avec la dent suivante, après quoi l'outil d'usinage est approché de la distance d'approche prédéfinie plus la différence entre le diamètre de cercle de la première dent et de la dent suivante
g) l'étape f) de la méthode est répétée pour les dents restantes.

2. Méthode selon la revendication 1, **caractérisée en ce que** l'outil, avant d'être rapproché, est dégagé de sa prise avec la dent par un mouvement radial opposé à la direction de l'avance.

3. Méthode selon la revendication 1, **caractérisée en ce que** l'outil d'usinage, après le contact avec la dent, est éloigné dans le sens contraire de l'approche, la distance parcourue par l'outil d'usinage jusqu'à la prise de contact étant mesurée au préalable.

4. Méthode selon la revendication 1, **caractérisée en ce que** l'usure de l'outil d'usinage est déterminée par le fait que l'outil d'usinage regagne une position de départ après l'usinage d'une dent et que la course entre la position de départ et la position de premier contact est mesurée, l'usure résultant de l'écart d'emplacement de la dent à rectifier et de la longueur de course mesurée, en prenant en compte les cotes de l'outil d'usinage.

5. Méthode selon l'une des revendications 1 à 4, **caractérisée en ce que**, après un premier usinage, la dent est usinée de nouveau quand la distance parcourue par l'outil d'usinage jusqu'à la prise de contact, ou bien l'usure mesurée, dépasse une valeur prédéfinie.
